# EUROPEAN PATENT APPLICATION

(11) **EP 4 654 004 A1**
(43) Date of publication of application: **26.11.2025**
(21) Application number: 25177952.6
(22) Date of filing: 21.05.2025
(51) Int. Cl.: G06F 8/10, G06F 8/20, G06F 8/30

(54) **SOFTWARE DEVELOPMENT TOOL AND METHOD FOR USING THE SAME**

(30) Priority: 22.05.2024 US 202463650470 P; 30.04.2025 US 202519194190
(71) Applicant: Concentrix CVG Customer Management Delaware LLC, Cincinnati, OH 45202 (US)
(72) Inventor: Ennis, Shawn, Ohio, 45202 (US); Thomas, Kevin, Ohio, 45202 (US); Clarke, Maximilian, Ohio, 45202 (US)
(74) Representative: Köllner, Malte

(57) **Abstract**

Systems and methods for software development tool and use thereof. The method can include accessing input data including a config file. The method can include processing the config file to generate output including (i) phases of a workflow and (ii) steps for the respective phases of the workflow. The method can include initiating a chat session for a step. The chat session including a conversation between a user and a first machine-learned model to work on the step. The method can include determining that the step has been completed and extracting output including conversation context data. The method can include determining that all phases of the workflow are complete. The method can include generating, based on the output and the conversation context data, output including an executable plan indicative of the one or more steps and the one or more phases.

## Description

### PRIORITY CLAIM

This application claims priority to and the benefit of U.S. Provisional Patent Application No. 63/650,470 filed on May 22, 2024. U.S. Provisional Patent Application No. 63/650,470 is hereby incorporated by reference in its entirety.

### FIELD

The present disclosure relates to software development tool for use, e.g., in new software product development processes, and a method for using the same.

### BACKGROUND

Creating software is a bit like building a house. Just as you wouldn't start building without a plan, software development also follows a structured process to ensure that the final product meets the needs of its users and is built to last. This can be time consuming, slowing the process down in situations where speed is desirable. Accordingly, tools to assist with software development would be welcomed in the art.

### SUMMARY

Aspects and advantages of embodiments of the present disclosure will be set forth in part in the following description, or may be learned from the description, or may be learned through practice of the embodiments.

One aspect of the present disclosure is directed to a computing system. The computing system includes one or more processors and one or more tangible, non-transitory, computer readable media that store instructions that are executable by the one or more processors to cause the computing system to perform operations. The operations include accessing, by the computing system, input data comprising a config file. The operations include processing, by the computing system, the config file to generate output comprising (i) one or more phases of a workflow and (ii) one or more steps for the respective phases of the workflow. The operations include, for each respective step of the one or more steps of a first phase of the one or more phases, initiating, by the computing system, a chat session for a first step of the one or more steps, the chat session comprising a conversation between a user and a first machine-learned model to work on the first step of the workflow. The operations include, for each respective step of the one or more steps of a first phase of the one or more phases, determining, by the computing system, that the first step has been completed. The operations include, for each respective step of the one or more steps of a first phase of the one or more phases, extracting, by the computing system and based on determining that the first step has been completed, output comprising conversation context data. The operations include determining that all phases of the one or more phases of the workflow are complete. The operations include generating, based on the output and the conversation context data, output comprising an executable plan indicative of the one or more steps and the one or more phases.

Another example aspect of the present disclosure is directed to a computer-implemented method. The method includes accessing, by the computing system, input data comprising a config file. The method includes processing, by the computing system, the config file to generate output comprising (i) one or more phases of a workflow and (ii) one or more steps for the respective phases of the workflow. The operations include, for each respective step of the one or more steps of a first phase of the one or more phases, initiating, by the computing system, a chat session for a first step of the one or more steps, the chat session comprising a conversation between a user and a first machine-learned model to work on the first step of the workflow. The operations include, for each respective step of the one or more steps of a first phase of the one or more phases, determining, by the computing system, that the first step has been completed. The operations include, for each respective step of the one or more steps of a first phase of the one or more phases, extracting, by the computing system and based on determining that the first step has been completed, output comprising conversation context data. The method includes determining that all phases of the one or more phases of the workflow are complete. The method includes generating, based on the output and the conversation context data, output comprising an executable plan indicative of the one or more steps and the one or more phases.

Yet another example aspect of the present disclosure is directed to one or more non-transitory computer readable media storing instructions that are executable by one or more processors to perform operations. The operations include accessing, by the computing system, input data comprising a config file. The operations include processing, by the computing system, the config file to generate output comprising (i) one or more phases of a workflow and (ii) one or more steps for the respective phases of the workflow. The operations include, for each respective step of the one or more steps of a first phase of the one or more phases, initiating, by the computing system, a chat session for a first step of the one or more steps, the chat session comprising a conversation between a user and a first machine-learned model to work on the first step of the workflow. The operations include, for each respective step of the one or more steps of a first phase of the one or more phases, determining, by the computing system, that the first step has been completed. The operations include, for each respective step of the one or more steps of a first phase of the one or more phases, extracting, by the computing system and based on determining that the first step has been completed, output comprising conversation context data. The operations include determining that all phases of the one or more phases of the workflow are complete. The operations include generating, based on the output and the conversation context data, output comprising an executable plan indicative of the one or more steps and the one or more phases.

### BRIEF DESCRIPTION OF THE DRAWINGS

Detailed discussion of embodiments directed to one of ordinary skill in the art are set forth in the specification, which makes reference to the appended figures, in which:
Figure 1A depicts a flowchart of an example workflow according to example embodiments of the present disclosure;
Figure 1B depicts a block diagram depicts a flowchart of an example workflow according to example embodiments of the present disclosure;
Figure 1C depicts a block diagram depicts a flowchart of an example workflow according to example embodiments of the present disclosure;
Figure 2 depicts a flowchart of an example workflow according to example embodiments of the present disclosure;
Figure 3 depicts a flowchart of an example workflow according to example embodiments of the present disclosure;
Figure 4 depicts a flowchart of an example method according to example embodiments of the present disclosure; and
Figure 5 depicts a block diagram of an example system according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary. The singular forms "a", "an", and "the" include plural references unless the context clearly dictates otherwise.

Generally, the present disclosure relates to a process for developing new software. More particularly, the present disclosure provides for a tool to assist with developing new software by performing necessary steps to provide a quality output from the tool. The present disclosure, referred to herein as GILES (Generative Intelligence for Limitless Engineers), is a software development tool that leverages the power of Generative Al (GenAl) to redefine software development. GILES is engineered to bridge the historical divide between the need for rapid software development and the imperative for maintaining high-quality standards. This is achieved at least in part through its integration of GenAl with a best-practice development methodology, designed to enhance the efficiency, reliability, and innovation of software engineering teams.

GILES can adapt dynamically to projects of varying scales and requirements through, e.g., customized Al prompting. This can provide outputs that are not only rapid but also highly specific to the project's needs, encompassing code, documentation, test data, and more. GILES fosters a culture of best practices and continuous innovation, making it a tool that not only aids in the creation of software but also elevates the standards of software engineering across the board.

GILES helps to standardize the use of best practices by creating a repeatable process.

While the tool will be described through an exemplary embodiment related to the generation and testing software code, the ideas described herein can be applied to a number of additional use cases. Additional use cases can include, for example, software code, product review documents, documentation to accompany software, test data, or other implementations. GILES can provide for utilization of Generative Al, such as machine-learned models (e.g., large language models) to redefine and simplify software development. GILES is designed to provide for improvements to software development technology by providing for rapid software development while complying with high-quality standards for software code and performance. In some implementations, the present disclosure can include using an orchestrated set of machine-learned model based chat interfaces to build phases and steps of process examination. The present disclosure can provide for personalized orchestration within a chat session where each individual message is analyzed to determine the best machine-learned model to facilitate the respective message. As such, the computing system can tailor answers that are generated to particular phases or steps in the process to provide for an improved human-machine interface. As an example, some machine-learned models can be removed from the candidate list of models based on the phase or step of the process. For instance, once a workflow has advanced to a portion on writing tests, the computing system can prevent a machine-learned model trained particularly for writing a feature from being selected and rather select a machine-learned model trained or tuned for writing tests. As such, less real-time processing is performed by using a tailored model opposed to a general purpose model which would need more context or complicated prompting to provide a helpful output.

The computing systems and methods of the present disclosure provide for a number of technical effects and benefits. More particularly, the computing systems and methods of the present disclosure provide for streamlining software development and testing to reduce computing resource utilization in development. By breaking software development into phases and steps, the computing system can ensure that requirements are met at each stage before progressing. As such, unnecessary re-work and compute resource utilization can be reduced. These technical effects and benefits can be achieved by training an initial model to best select secondary models (e.g., "assistants") tuned for particular use cases. By selecting particular secondary models for answering questions or generating output relating to particular phases of the software generation process, the computing system can avoid the need for rework and can provide improved generation of software or other work items. For instance, by providing a structured and guided interface for generating code or performing particular work items, the computing system can intelligently select models to be called to process various inputs. As such, a number of calls that are made to a generative model can be reduced. Decreasing a number of calls to a generative model, and particularly a large language model, can reduce use of computing resources used as well as provide for improvements to the computing environment. For instance, performance of inference by a generative model, such as a large language model, can utilize large amounts of energy. By reducing the number of calls made to the generative model, the computing system can reduce energy consumption which can in turn reduce pollution. Additionally, by streamlining the prompt and context that are fed to the respective generative models, the computing system can provide for improved output to be generated by the models.

GILES can provide for adapting dynamically to projects of varying scales and requirements utilizing customized model prompting. As such, the outputs generated by the respective generative models can be produced rapidly as well as highly tailored to specific project needs including code, documentation, test data, and more.

The software development industry faces a number of challenges, including the need for rapid development, maintaining high-quality standards, and reducing technical debt. Existing solutions often focus on producing more code quickly, which can exacerbate existing engineering problems. The existing solutions can lead to increased technical debt, project cost overruns, higher Total Cost of Ownership (TCO), unmet project goals, and losses to competition. The inventors have found that the output from Generative Al cannot be inherently trusted without rigorous testing, which is often overlooked in the rush to deliver products to market. The inventors recognized a need for a solution that balances speed, quality, and reliability, while also ensuring the maintainability and testability of the code.

For example, existing solutions have attempted to address these issues, but they often fall short in several key areas. Existing solutions may not integrate well with development methodologies, limiting their scalability and specificity. They may also lack versatility, focusing solely on code generation rather than offering additional capabilities such as generating documentation or test data.

An objective of GILES is to allow software development teams to produce fast, robust, and reliable software while significantly reducing the technical debt that often accompanies rapid development. This is achieved at least in part through several key improvements over existing technologies:
Speed to Market: By generating a large portion of the assets needed for software development, including testable requirements, test cases, and documentation, GILES drastically reduces the time from ideation to deployment.

Quality and Maintainability: Unlike existing technologies that prioritize code generation speed over quality, GILES invests the productivity gains from GenAl in enforcing best practices, such as Agile and behavior-driven development (BDD). This approach ensures the output is not only quick but also of high quality, testable, and maintainable.

Reduction of Technical Debt: GILES' methodology focuses on capturing defects earlier in the development process and reducing the effort required to follow best practices. This significantly slashes technical debt and the associated long-term costs.

Customization and Versatility: Through customized prompting and the use of best practice examples, GILES generates outputs that are highly specific to each project's requirements. This level of specificity and versatility is unmatched by existing tools.

Trust through Testing: Recognizing that outputs from GenAl cannot be inherently trusted, GILES emphasizes rigorous testing and test automation, investing in BDD to ensure the reliability and trustworthiness of the generated code and documentation. As such, the present methods and systems described herein can avoid hallucinations or identify hallucinations early on in the development process to reduce or eliminate downstream effects.

In summary, GILES represents a significant leap forward in software development technology, offering unparalleled improvements in speed, quality, and cost-efficiency. Its unique approach to leveraging GenAl, combined with a commitment to best practices and quality outputs, positions GILES as a transformative tool in the tech industry, with the potential to set new standards for software development.

Some of the processes for developing new software can include: describe the requirement; write testable acceptance criteria; write specifications (e.g., an API spec); write test cases and test automation; write code; refine test automation; and write documentation. These steps are time consuming but can be necessary to ensure a high quality product. Skipping any of these steps can lead to software that doesn't meet user needs, is full of bugs, or is difficult to maintain-much like a house that's missing features, has electrical problems, or was built with poor-quality materials. While following this process might seem like more work upfront, it's much cheaper in the long run because it reduces the need for costly fixes after the software is in use.

Many teams and developers skip steps due to a lack of experience, skills, or because they find some tasks dull. Others might be under pressure to meet deadlines and choose to cut corners, not realizing that this can lead to higher costs down the line due to the need for fixes and maintenance.

Some features of the GILES technology are as follows:
Integrated Development Methodology: Unlike standalone IDE tools that suggest snippets of code based on the code a user is editing on screen, GILES incorporates a unique development methodology that follows Agile and Behavior Driven Design (BDD) best practices. The user can describe the outcome they want in terms of requirements. GILES then generates a large portion of the asset (e.g., at least 60%, such as at least 80%), allowing the user to refine the output at each stage. Those assets are testable requirements, specifications (e.g. API specs), test and test automation, code, and documentation. By funneling the user through this process, any flaws in design can quickly be identified and remedied. And the earlier in the process a flaw can be discovered, the less time and effort it requires to achieve the desired feature or software outcome.

Customized GenAl Prompting Mechanism: A novel method allowing for users to generate prompts that are highly specific and custom to the goal the user is trying to achieve. By building on each agile best-practice asset that was generated before it, the prompts allow the user's chosen generative Al model to produce an incredibly accurate outcome, whether it be generating a specification, test, code or documentation.

Multi-Dimensional Output Generation: Beyond code, GILES generates a comprehensive suite of development assets, including documentation and test data, a significant advancement over current tools.

Quality-First Approach: The emphasis on rigorous testing and BDD within the GenAl framework is innovative, ensuring the reliability of generated outputs, and removing the risk of introducing code with bugs, or that don't meet the original requirements or intent of the user. Some particular areas of improvement with GILES are as follows:
Integrated Development Methodology: While these tools primarily are an advanced autocomplete tool within the coding environment, GILES integrates a unique development methodology that encompasses not just code generation but also the generation of testable requirements, test cases, and documentation, ensuring a comprehensive approach to software development.

Custom Al Prompting and High-Specificity Outputs: GILES employs a customized Al prompting mechanism that tailors outputs to the specific needs of the project, going beyond code suggestions to include documentation, test data, and more. This allows for the outputs to be not only relevant but also aligned with the project's overall requirements, something other tools do not inherently provide.

Comprehensive Asset Generation: Unlike other tools, which focus on generating code snippets and recommendations, GILES is designed to produce a broader range of software development assets, including but not limited to testable requirements, test cases, test automation code, and detailed documentation. This comprehensive asset generation approach addresses more stages of the software development lifecycle than other tools.

Quality and Trust through Testing: GILES emphasizes the importance of quality and reliability in its generated outputs by incorporating rigorous testing and test automation, guided by behavioral-driven development (BDD) principles. This focus on quality assurance and trust through testing is a distinctive feature that sets GILES apart from other tools, which do not explicitly integrate these practices into its functionality.

GILES may be used with Rapid Prototyping, Enterprise Software Development, and other software product development tasks. With respect to Rapid Prototyping, a startup can use GILES to quickly generate a prototype for their app, including backend code, API documentation, and initial test cases, allowing them to validate their idea with minimal investment. With respect to Enterprise Software Development, a large corporation could employ GILES to standardize the generation of testable requirements and test scripts across teams, ensuring consistency and reducing the time to market for new features.

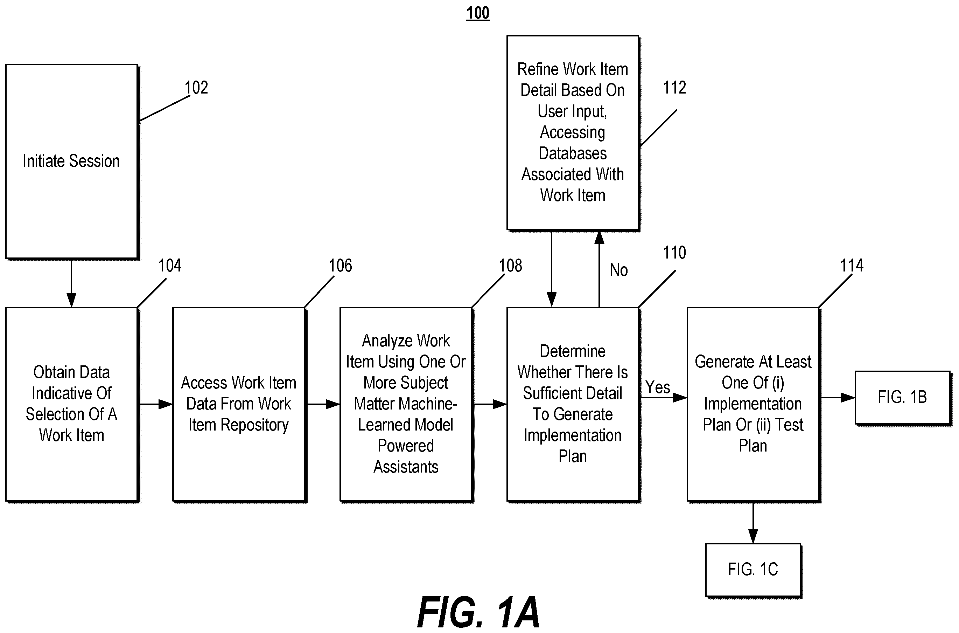

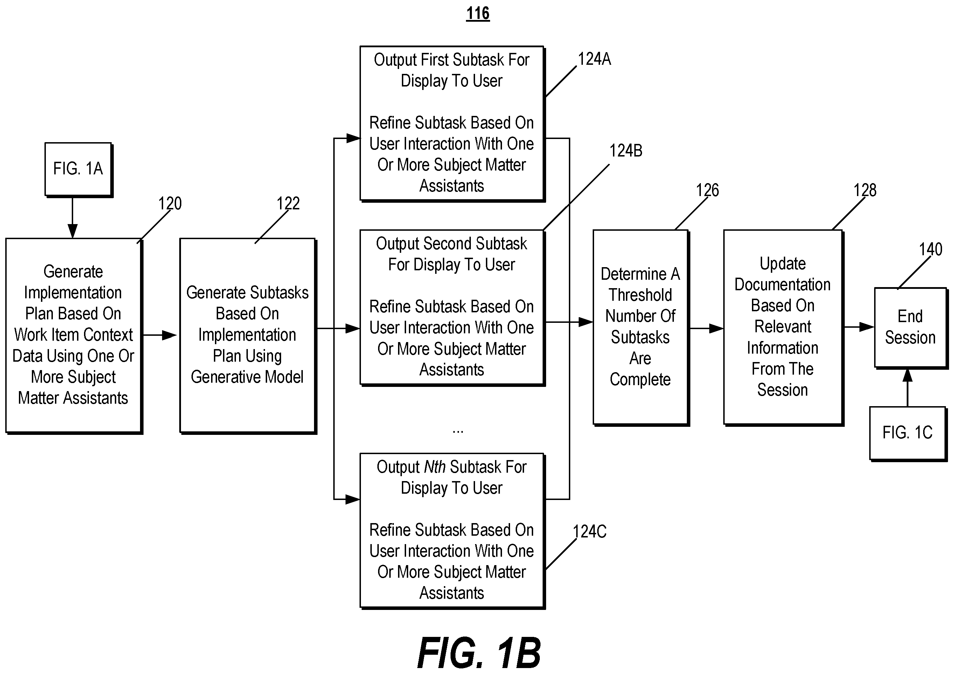

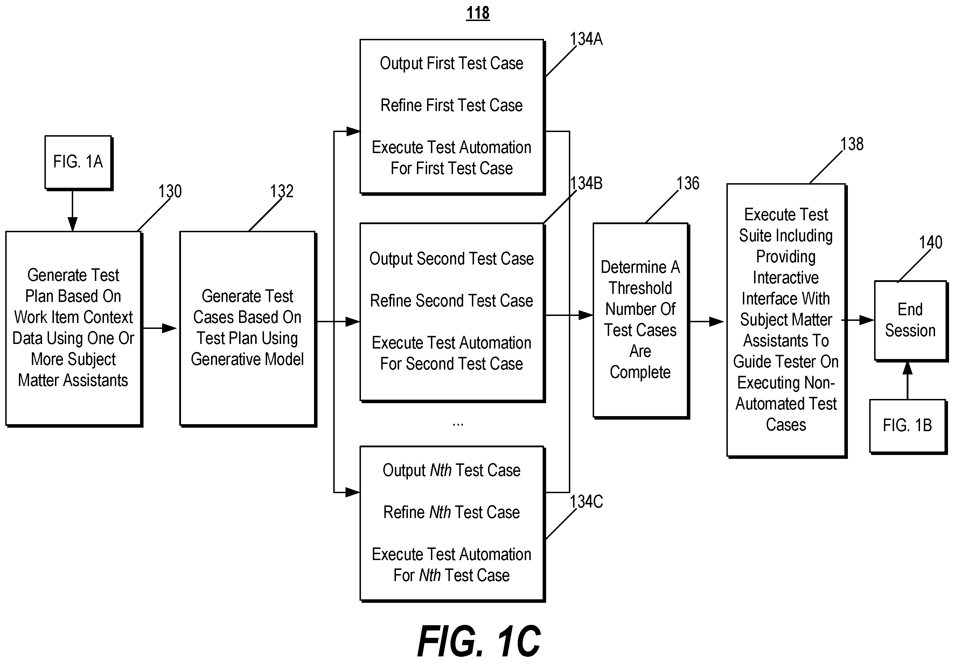

The improvements associated with the computing systems and methods discussed herein can be further understood with reference to the figures. The computing systems and methods described herein depict and describe an integrated development methodology. Unlike existing integrated development environments (IDEs), that suggest snippets of code based on the code a user is editing on the screen, the present disclosure provides for incorporation of a unique development methodology that follows Agile and Behavior Driven Design (BDD) best practices. As will be seen by workflow 100 depicted in Figure 1, the processes described herein can allow for quick identification of flaws in design and provide for remedies for any identified issues. Workflow 100 can include initiate session 102. Following initiate session 102, workflow 100 can include obtaining data indicative of selection of a work item at operation 104. Workflow 100 can include accessing work item data from work item repository at operation 106. In some instances, the computing system can include a repository of feature task specifications. An existing item can be selected or otherwise accessed via an existing program and utilized in workflow 100.

Workflow 100 can include analyzing work item using one or more subject matter machine-learned model powered assistants at operation 108. For instance, an existing work item can be analyzed by a GenAl powered interface to check for missing items, check for errors, and make recommendations. In some implementations, the work product and a customized prompt can be provided to a secondary machine-learned model such as a large language model as input. The secondary machine-learned model can analyze the work product in light of the customized prompt and generate output including flags of errors or missing items and make recommendations. In some instances, the large language models can be proprietary or subject matter specific models. In some instances, the large language models can be publicly available models that are accessed using application programming interfaces (APIs) or other mechanisms.

Workflow 100 can include determining whether there is sufficient detail to generate an implementation plan at operation 110. A GenAl powered assistant can determine if there is sufficient detail to generate an implementation plan. As described herein, the GenAl powered assistant can include a machine-learned model such as a large language model. For instance, the assistant can, based on the operation 108 and instructions provided to the assistant, check over the item. The assistant can check over the item by obtaining data associated with the item and processing the data to generate output. By way of example, the assistant can generate or be provided with a checklist of items for different work product types. Based on the checklist, the assistant can process the received input to determine whether there is enough detail to proceed on with operation 114 or if it is necessary to perform operation 112.

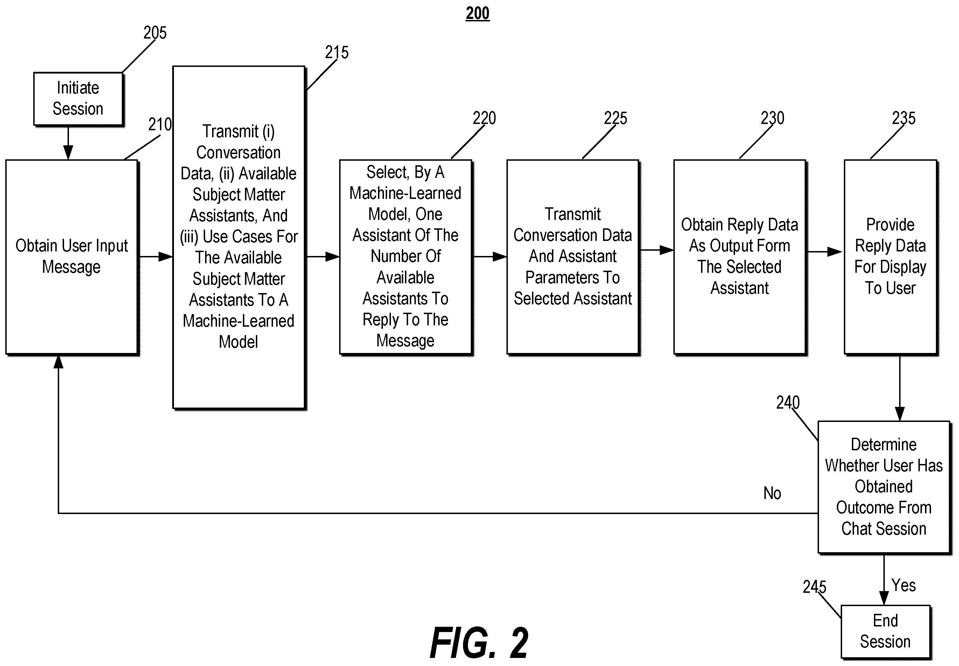

If there is not sufficient detail to generate the implementation plan, the computing system can perform operation 112. Workflow 100 can include refining work item details based on user input at operation 112. Refining work item details based on user input can include accessing databases associated with work item. In some instances, the computing system can include a number of assistants (e.g., secondary models, subject matter specific models) that are tailored for particular use cases. As such, the computing system can determine, based on the step or phase of the workflow, which assistant to use. If more detail is needed, interaction with one or more subject-matter specific assistants can be facilitated. In some instances, this can be performed as described by workflow 200 in FIG. 2.

If there is sufficient detail to generate the implementation plan at operation 110, the computing system can perform operation 114. Workflow 100 can include generating at least one of (i) implementation plan or (ii) test plan at operation 114. Following generation of at least one of (i) implementation plan or (ii) test plan at operation 114, workflow can include the operations described in FIG. 1B or FIG. 1C. Workflow 116 and workflow 118 can be performed in any order. In some instances, workflow 116 is performed before workflow 118. In some instances, workflow 118 is performed before workflow 118.

Turning to FIG. 1B, workflow 116 can include generating an implementation plan based on work item context data using one or more subject matter assistants at operation 120. Existing models can write code, but they fail to generate plans for how to implement the work or code that is generated. As such, workflow 116 describes steps which can be performed to provide for implementation of the work product or code that is generated.

Workflow 116 can include generating subtasks based on implementation plan using generative model at operation 122. The subtasks can be generated by taking a larger work item as input and generating various subtasks which help facilitate completion of the larger work item.

Workflow 116 can include outputting a first subtask for display to the user and refine subtask based on user interaction with one or more subject matter assistants at operation 124A. This can be performed for a second subtask at operation 124B up to a Nth subtask at operation 124C. In some instances, refinement can be facilitated using a chat interface (e.g., via a workflow like workflow 200 depicted in FIG. 2). The refinement of the subtasks can provide for ensuring that the code or other output generated for each subtasks is correct before the next subtask is performed. As such, the plan for the end output can be solidified before code or actual output is generated by the computing system. This can allow for code generation or other work product generation to be more straightforward and accurate due to tailoring an input prompt for the model generating the work product. For instance, the output from the refinement process such as a goal of the code or specific requirements can be included in the prompt that is generated and provided as input into the model that generates the code or other work product. As such, the model can generate better code or work product due to being provided an improved prompt.

In some instances, the implementation plan can include diagrams of how features work or how the newly proposed code interacts with existing parts of the code base. As such, the output can be more than simple text paragraphs, but can include multi-modal output such as diagrams that demonstrate changes to the computing system architecture or other relevant diagrams. In some instances, a subtask can be associated with a certain portion of code to be generated. As such, the output of a subtask can include suggested code. In some instances, the code that is suggested can include small mistakes or incorrect syntax. As such, the refinement portion of the subtask can allow for user input to refine or otherwise fix the code. In some instances, the user can provide input relating to mistakes and an assistant can be called to process the initial output and user feedback to generate updated output.

Workflow 116 can include determining a threshold number of subtasks that are complete at operation 126. For instance, based on the subtasks or over-arching task to be performed, GILES can determine a threshold number of subtasks that upon completion, satisfy a threshold number of the subtasks needed for moving on to the next step. In some implementations, the threshold number of subtasks can be a set number. In some implementations, the threshold number of subtasks can be dynamic or can include specific subtasks that are weighted differently based on the objective of the subtask.

Workflow 116 can include updating documentation based on relevant information from the session at operation 128. By differentiating the subtask steps and the updating documentation operations, GILES can ensure that a threshold amount of the subtasks have been completed such that the documentation can be updated appropriately. As additional steps and phases of development occur, GILES and the underlying models can become better at understanding the tasks being performed by increasing the repository of documentation and expanding the codebase that can be used as context for processing requests. As such, utilization of GILES can create a flywheel effect. Additionally, in some implementations, the models utilized in GILES can be trained or fine-tuned for particular use cases to provide improved output.

Workflow 116 can include ending session at operation 140.

Turning to FIG. 1C, workflow 118 can include generating a test plan based on work item context data using one or more subject matter assistants at operation 130.

Workflow 118 can include generating test cases based on a test plan using a generative model at operation 132. The generation of test cases can be similar to the generation of the implementation plan. By way of example, generating the test cases and refining the test cases can include a machine-learned model processing input to determine how to test respective features and developing a strategy for which tests can be automated and which tests cannot. Workflow 118 can include outputting a first test case, refining the first test case, and executing test automation for the first test case at operation 134A. This can be performed for a second test case at operation 134B up to an Nth test case at operation 134C. As such, the computing system can generate output including a number of potential test cases. A user can initiate a chat session and interact with a chat interface to refine each test case, or a selected number of test cases to determine how to test features associated with the respective test cases and which tests to automate. As described herein, the chat session can facilitate a conversation with subject matter specific models.

Workflow 118 can include determining that a threshold number of test cases are complete at operation 136 and proceed to operation 138.

Workflow 118 can include executing a test suite including providing an interactive interface with subject matter assistants to guide a tester on executing non-automated test cases at operation 138. In some instances, the test cases can include automated test cases. As such, the output of GILES can include executable instructions that can cause processors to perform operations to run the automated test cases. In some instances, for non-automated test cases GILES can output instructions on how a test case can be performed manually.

Workflow 118 can include ending session at operation 140 once the subtasks and/or test cases are complete.

FIG. 2 depicts an example workflow 200 for facilitating conversational user interfaces for software development. Workflow 200 can include initiation of the chat session at operation 205. For instance, workflow 200 can include obtaining user input message at operation 210. By way of example, a user can initiate a chat session via a chat box interface element on a computing device of the user.

Workflow 200 can include transmitting (i) conversation data, (ii) available subject matter assistants, and (iii) use cases for the available subject matter assistants to a machine-learned model at operation 215. The data that is transmitted to the machine-learned model can be processed by the machine-learned model in operation 220.

Workflow 200 can include the machine-learned model selecting one assistant of the number of available assistants to reply to the message at operation 220. For instance, the machine-learned model can process the (i) conversation data, (ii) available subject matter assistants, and (iii) use cases for the available subject matter assistants to generate output including a selected subject matter assistant. Each subject matter assistant can include a machine-learned model, such as a subject matter specific model. After each message that is received, workflow 200 can select an assistant to reply to the message. Rather than existing systems that will select a single general purpose assistant for an entire conversation, the present disclosure can provide for selection of an assistant best suited to reply to the particular message based on prior messages, the available subject matter assistants, and use cases for the subject matter assistants. As such, the computing system can ensure that depending on the phase or step of the process, a subject matter assistant that is best suited to help with that respective phase or step of the process is selected over alternative subject matter assistants. For instance, if a user is asking questions about testable code or test automation requirements, the computing system can disqualify subject matter assistants that answer questions relating to writing features. Rather, the computing system can select a subject matter assistant that is trained on answering questions or advising on writing tests.

Additionally, or alternatively, a subject matter assistant can be selected based at least in part on a subject matter assistant that was previously selected or recently answered a question. As such, regression to prior steps or phases of the design process can be avoided.

Workflow 200 can include transmitting conversation data and assistant parameters to the selected assistant at operation 225. As such, the proper context can be provided to the assistant to improve the output that can be obtained by the assistant.

Workflow 200 can include obtaining reply data as output from the selected assistant at operation 230. Workflow 200 can include providing reply data for display to a user at operation 235. For instance, the reply can be provided as a message within the chat box presented via the user interface of the user device.

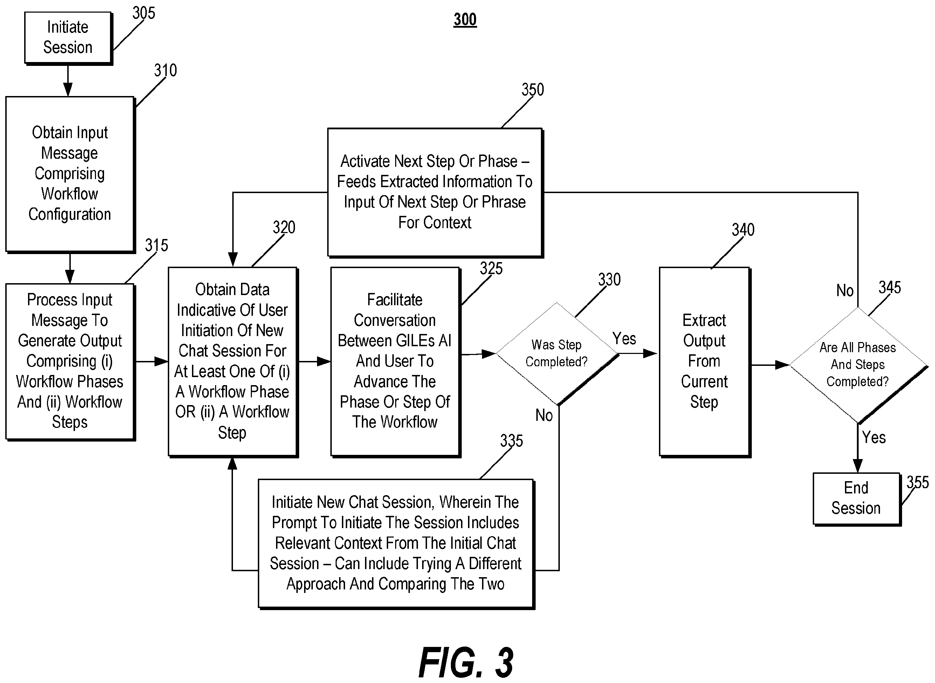

Workflow 200 can include determining whether a user has obtained an outcome from the chat session at operation 240. If yes, the computing system can end the session at operation 245. If no, the computing system can return to operation 210 and obtain a user input message. FIG. 3 depicts workflow 300 for generating a workflow configuration. Workflow 300 can include initiation of a session at operation 305.

Workflow 300 can include obtaining input message including a workflow configuration at operation 310. For instance, the input message can include a request for taking an initial work product and requesting that a plan be generated including the generation of work items. Workflow 300 can include processing input message to generate output comprising (i) workflow phases and (ii) workflow steps at operation 315. In some instances, the workflow phases and workflow steps can be generated based on features extracted from the initial input message.

By way of example, the initial input message can include a request to take a product review document and generate work items as output. An intermediate model output may include themes, epics, features, definitions, or other categories of information associated with the product review document.

Workflow 300 can include obtaining data indicative user initiation of a new chat session for at least one of (i) a workflow phase or (ii) a workflow step at operation 320.

Workflow 300 can include facilitating a conversation interface between GILES and an end user to advance the present workflow phase or workflow step at operation 325. In some instances, GILES can prevent a user from jumping past a current step and require that each respective step be performed before a successive step be performed.

At operation 330, workflow 300 can include determining whether the workflow step has been completed. If the workflow step was not completed, at operation 335, workflow 300 can include initiating a new chat session. The prompt to initiate the session can include relevant context from the initial chat session. In some instances, operation 335 can include trying a different approach and comparing an existing approach to the new approach. Workflow can return to operation 320 following completion of the newly initiated chat session.

If the workflow step was completed, at operation 340, workflow 300 can include extracting output from the current step. These steps described herein can be performed iteratively for each step of a respective phase as well as each respective phase of one or more phases. At operation 345, workflow 200 can include determining whether all phrases and steps have been completed. If, at operation 345, a determination is made that not all phases and steps are completed, at operation 350, workflow 300 can include activating a next step or phase. The next step or phase can include providing extracted information as input into a next step or phase for content. For instance, the extracted information can be provided at an operation 320 where a new chat session can be initiated. If all the steps have been completed, at operation 355 workflow 300 can include ending the session.

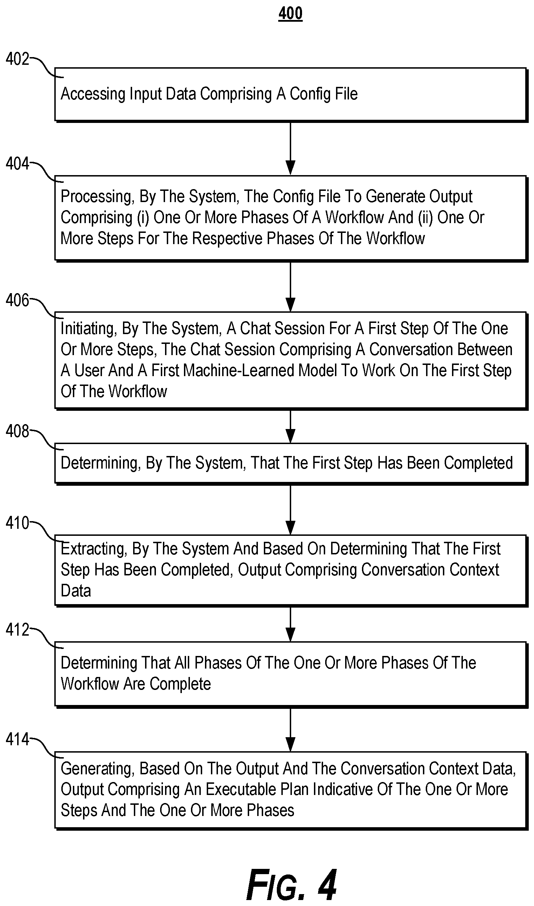

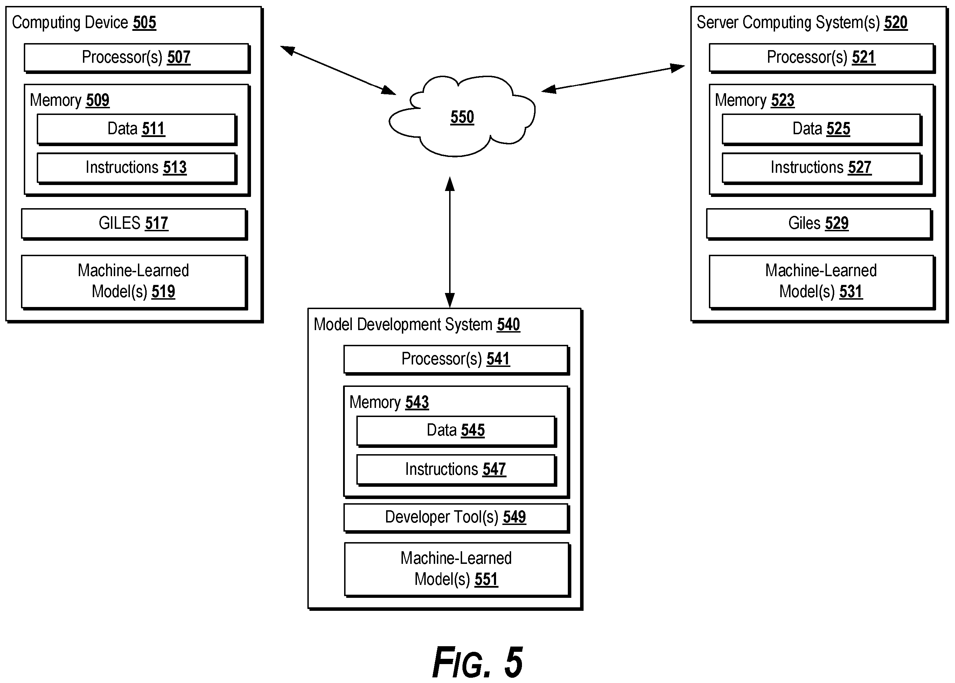

FIG. 4 depicts a flow chart of an example method for utilization of a tool for software development. Method 400 can be performed by processing logic including hardware, software, or a combination. Hardware can include processing devices, hardware of a device, circuitry, microcode, programmable logic, dedicated logic, integrated circuit and the like. Software can include instructions executed or run on a processing device. In some embodiments, method 400 can be performed by a server computing system or a client computing system, such as the computing systems depicted in FIG. 5. Although shown in a particular order, unless otherwise specified, the order of processes can be modified. As such, the illustrated embodiments serve as examples and the proposed operations can be performed in different orders including in parallel. Additionally, in some implementations, one or more processors or operations can be omitted. As such, not all processes are required in every embodiment and additional or alternative process flows are possible.

At operation 402, processing logic can access input data comprising a config file. The config file can include a description of a software product to be developed. A config file can also be referred to as a configuration file. In some implementations, a config file can include settings or parameters for computer programs, applications, server processes, or operating systems and can provide for controlling how software operates without changing source code. Config files can adjust functional characteristics or ornamental characteristics.

In some instances, the config file can include a description of a desired outcome including requirements. GILES, through the operations described herein, can generate a large portion of the asset (such as at least 60-80% of the asset) while allowing for refinement at each step or phase of the generation process (e.g., via chat interfaces or other user interfaces configured to obtain user input).

The present technology can be used for a variety of use cases. In some examples, a high level idea can be turned into executable code. Some additional use cases can include generating a product review document from a product review frequently asked questions document; generating marketing or sales enablement materials from technical documentation; refactoring portions of codebase; restructuring of work items in a project management system; or tech deck resolution such as providing greater unit test coverage for a code base.

At operation 404, processing logic can process the config file to generate output comprising (i) one or more phases of a workflow and (ii) one or more steps for the respective phases of the workflow.

In some implementations operations 406 through 410 can be performed for each respective step of the one or more steps of a first phase of the one or more phases. Operations 406 to 410 describe an example of operations that can be performed for each respective step but are described as being performed for a first step for ease. As such, the term first step can be interchanged with a respective step or the respective step and can be performed iteratively for multiple steps within a phase. Additionally, the operations described herein can be performed for multiple phases of a development process.

At operation 406, processing logic can initiate a chat session for a first step of the one or more steps, the chat session comprising a conversation between a user and a first machine-learned model to work on the first step of the workflow. In some implementations, initiating the chat session can include selecting, based on the first step of the workflow, the first machine-learned model out of a plurality of candidate machine-learned models based on a subject matter associated with the first step. As described herein, each candidate machine-learned model can be associated with an assistant or subject matter specific assistant.

In some implementations, the combination of each respective step of the one or more steps includes a user session. The input provided to the first machine-learned model can include context data associated with one or more prior chat sessions associated with the user session. At operation 408, processing logic can determine that the first step has been completed. For instance, processing logic can obtain data indicative of user selecting a user interface element indicating that the step has been completed or otherwise providing input indicating satisfaction with the completion of the current step. For instance, a user can provide freeform input into the chat interface indicating that they can advance to the next step.

At operation 410, processing logic can extract, based on determining that the first step has been completed, output comprising conversation context data. Processing logic can parse the conversation context data to determine which portions of conversation data should be saved and passed as context data to the next machine-learned model utilized in the process.

At operation 412, processing logic can determine that all phases of the one or more phases of the workflow are complete. For instance, processing logic can obtain data indicative of user selecting a user interface element indicating that the phase has been completed or otherwise providing input indicating satisfaction with the completion of the current phase. For instance, a user can provide freeform input into the chat interface indicating that they can advance to the next step. In some instances, processing logic can automatically determine that all of the phases of the workflow have been completed based on the conversation and expected phases or steps of the respective phases. As such, the system can determine that the phases are complete without explicit indication by a user.

At operation 414, processing logic can generate, based on the output and the conversation context data, output comprising an executable plan indicative of the one or more steps and the one or more phases. The executable plan can include at least one of: (i) testable requirements data, (ii) specifications data, (iii) test data, (iv) code data, or (v) documentation data.

The specifications data can include application programming interface (API) specification. API specification files can be used to generate API tests to allow for quick detection and fixing of issues. In some instances, API specifications can be used to test API documentation, load testing or performance testing.

The test data can include a test plan and test automation. The test automation comprises executable instructions that, when executed by the one or more processors of the computing system, cause the computing system to perform operations comprising the test automation. Returning to the API example, test plan data can be associated with test plans for the API. API documentation testing can analyze the documentation to ensure that the API can be understood and used. Load testing determines the amount of load that can be handled by the API and performance testing can ensure that the API meets or exceeds expectations associated with specific metrics such as latency or other metrics.

The code data can include executable code in one or more computing languages. In some instances, once approved, the code data can be added to the codebase and released for deployment. In some instances, the testing stage of the operations described herein can include a small release of code to a subset of users for an initial test before releasing the code for use by all users.

The documentation data can include natural language description to accompany the code data. The documentation data can explain what particular portions of the code do and how to integrate with the system. In some instances, documentation data can include highlights on updates to existing features or functionality or description of new features.

FIG. 5 depicts a block diagram of an example computing system for a software development tool according to exemplary embodiments of the present disclosure.

The example computing system can include computing device(s) 505, server computing system 520, and model development system 540. The example computing system can include a controller configured to receive the data and, e.g., make control decisions based on the received data. Computing device(s) 505 and server computing system(s) can be communicatively coupled over network 550. In some instances, operations described herein can be performed by the computing device(s) 505. In some instances, operations described herein can be performed by serving computing system(s) 520. Additionally, or alternatively, computing device(s) 505 and server computing system(s) 520 can work cooperatively to perform one or more of the operations described herein.

In one or more exemplary embodiments, the controller may be a stand-alone controller. Referring particularly to the operation of the controller, in at least certain embodiments, the controller can include one or more computing device(s). Computing device(s) 505 can be any type of computing device, such as, for example, a personal computing device (e.g., laptop or desktop), a mobile computing device (e.g., smartphone or tablet), an embedded computing device, a server computing device, a virtual machine operating on a host device, or any other type of computing device. Computing device(s) 505 can be a client computing device. Computing device(s) 505 can be an end-user computing device. Computing device(s) 505 can be a computing device of a service provider that provides a service to an end user (who may use another computing device to interact with computing device(s) 505).

The computing device(s) 505 can include one or more processor(s) 507 and one or more memory device(s) 509. The one or more processor(s) 507 can include any suitable processing device, such as a microprocessor, microcontroller, integrated circuit, logic device, and/or other suitable processing device. The one or more memory device(s) 509 can include one or more computer-readable media, including, but not limited to, non-transitory computer-readable media, RAM, ROM, hard drives, flash drives, and/or other memory devices. For instance, the memory 509 (e.g., one or more non-transitory computer-readable storage mediums, memory devices) can store data 511 that can be obtained, received, accessed, written, manipulated, created, and/or stored. In some implementations, the computing device(s) 505 can obtain data from one or more memory device(s) that are remote from the computing device(s) 505.

The one or more memory device(s) 509 can store information accessible by the one or more processor(s) 507, including computer-readable instructions 513 that can be executed by the one or more processor(s) 507. The instructions 513 can be any set of instructions 513 that when executed by the one or more processor(s) 507, cause the one or more processor(s) 507 to perform operations. In some embodiments, the instructions 513 can be executed by the one or more processor(s) 507 to cause the one or more processor(s) 507 to perform operations, such as any of the operations and functions for which the controller and/or the computing device(s) 505 are configured, the operations of the method of claim 1, the operations described in association with GILES, the operations described in FIG. 1 to FIG. 4, and/or any other operations or functions of the one or more computing device(s) 505. The instructions can be software written in any suitable programming language or can be implemented in hardware. Additionally, and/or alternatively, the instructions 513 can be executed in logically and/or virtually separate threads on the one or more processor(s) 507. The one or more memory device(s) 509 can further store data 511 that can be accessed by the one or more processor(s). Computing device(s) 505 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input. Computing device(s) 505 can include GILES 517 and/or machine-learned model(s) 519. GILES 517 can be a software-based software development tool stored in memory of a computing device. In some instances, GILES 517 can be stored in the memory 509 of computing device(s) 505. GILES 517 or GILES 529 can be user facing tools which interface with multiple machine-learned models or back-end tools to facilitate the operations described herein. In some instances, GILES 517 and GILES 529 can communicate with the other systems described herein via application programming interfaces. In some instances, models can be locally stored on the computing device(s) 505. Additionally, or alternatively, models can be accessed over network 550.

Machine-learned models 519 can include one or more machine-learned model(s), such as sequence processing models. Machine-learned models 519 can include one or multiple model instance(s). Machine-learned model(s) 519 can be received from server computing system(s) 520, model development system 540, or developed locally on computing device(s) 505. Machine-learned model(s) 519 can be loaded into memory 509 and used or otherwise implemented by processor(s) 507. Computing device(s) 505 can implement multiple parallel instances of machine-learned model(s) 519.

The computing system can also include a network 550 used to communicate, for example, with the other components of the computing system, one or more users of the computing system, local or remote computing systems, etc. The network 550 can include any suitable components for interfacing with one or more network(s), including for example, transmitters, receivers, ports, controllers, antennas, and/or other suitable components.

The computing device(s) 505 and server computing system(s) 520 can be communicatively coupled with model development system 540 over network 550. Model development system 540 is an example system that can host or serve model development platform(s) for development of machine-learned models 551.

The server computing system(s) 520 includes one or more processors 521 and a memory 523. The one or more processors 521 can be any suitable processing device (e.g., a processor core, a microprocessor, an ASIC, a FPGA, a controller, a microcontroller, etc.) and can be one processor or a plurality of processors that are operatively connected. The memory 523 can include one or more non-transitory computer-readable storage media, such as RAM, ROM, EEPROM, EPROM, one or more memory devices, flash memory devices, etc., and combinations thereof.

The memory 523 can store information that can be accessed by the one or more processors 521. For instance, the memory 523 (e.g., one or more non-transitory computer-readable storage mediums, memory devices) can store data 525 that can be obtained, received, accessed, written, manipulated, created, and/or stored. In some implementations, the server computing system(s) 520 can obtain data from one or more memory device(s) that are remote from the server computing system(s) 520.

The memory 523 can also store computer-readable instructions 527 that can be executed by the one or more processors 521. The instructions 527 can be software written in any suitable programming language or can be implemented in hardware. Additionally, or alternatively, the instructions 527 can be executed in logically and/or virtually separate threads on processor(s) 521.

For example, the memory 523 can store instructions 527 that when executed by the one or more processors 521 cause the one or more processors 521 to perform any of the operations and/or functions described herein.

According to an aspect of the present disclosure, the server computing system(s) 520 can store or include GILES 529 or one or more machine-learned models 531. For example, the machine-learned models 531 can be or can otherwise include various machine-learned models such as a random forest classifier; a logistic regression classifier; a support vector machine; one or more decision trees; a neural network; and/or other types of models including both linear models and non-linear models. Example neural networks include feed-forward neural networks, recurrent neural networks (e.g., long short-term memory recurrent neural networks), convolutional neural networks, or other forms of neural networks.

In some implementations, the server computing system(s) 520 can receive the one or more machine-learned models 531 from the model development system 540 over network 550 and can store the one or more machine-learned models 531 in the memory 523. The server computing system(s) 520 can then use or otherwise run the one or more machine-learned models 531 (e.g., by processor(s) 521).

In an example configuration, machine-learned models 531 can be included in or otherwise stored and implemented by server computing system(s) 520 to establish a client-server relationship with computing device(s) 505 for serving model inferences. For instance, server computing system(s) 520 can implement model host on behalf of client(s) on computing device(s) 505. For instance, machine-learned models 531 can be implemented by server computing system(s) 520 as a portion of a web service (e.g., remote machine-learned model hosting service, such as an online interface for performing machine-learned model operations over a network on server computing system(s) 520). For instance, server computing system(s) 520 can communicate with computing device(s) 505 over a local intranet or internet connection. For instance, computing device(s) 505 can be a workstation or endpoint in communication with server computing system(s) 520, with implementation of machine-learned models 531 being managed by server computing system(s) 520 to remotely perform inference (e.g., for runtime or training operations), with output(s) returned (e.g., cast, streamed, etc.) to computing device(s) 505. Machine-learned models 531 can work cooperatively or interoperatively with machine-learned models 519 or machine-learned models 551 on computing device(s) 505 to perform various tasks.

The model development system 540 includes one or more processors 541 and a memory 543. The one or more processors 541 can be any suitable processing device (e.g., a processor core, a microprocessor, an ASIC, a FPGA, a controller, a microcontroller, etc.) and can be one processor or a plurality of processors that are operatively connected. The memory 543 can include one or more non-transitory computer-readable storage media, such as RAM, ROM, EEPROM, EPROM, one or more memory devices, flash memory devices, etc., and combinations thereof.

The memory 543 can store information that can be accessed by the one or more processors 541. For instance, the memory 543 (e.g., one or more non-transitory computer-readable storage mediums, memory devices) can store data 545 that can be obtained, received, accessed, written, manipulated, created, and/or stored. In some implementations, the model development system 540 can obtain data from one or more memory device(s) that are remote from the model development system 540.

The memory 543 can also store computer-readable instructions 547 that can be executed by the one or more processors 541. The instructions 547 can be software written in any suitable programming language or can be implemented in hardware. Additionally, or alternatively, the instructions 547 can be executed in logically and/or virtually separate threads on processor(s) 541.

For example, the memory 543 can store instructions 547 that when executed by the one or more processors 541 cause the one or more processors 541 to perform any of the operations and/or functions described herein.

In some implementations, the model development system 540 includes one or more server computing devices. If the model development system 540 includes multiple server computing devices, such server computing devices can operate according to various computing architectures, including, for example, sequential computing architectures, parallel computing architectures, or some combination thereof.

In addition, or alternatively to the machine-learned model(s) 519 at the computing device(s) 505 or server computing system(s) 520, the model development system 540 can include one or more machine-learned models 551. For example, the machine-learned models 551 can be or can otherwise include various machine-learned models such as transformer model; a diffusion model; a random forest classifier; a logistic regression classifier; a support vector machine; one or more decision trees; a neural network; and/or other types of models including both linear models and non-linear models. Example neural networks include feed-forward neural networks, recurrent neural networks (e.g., long short-term memory recurrent neural networks), convolutional neural networks, or other forms of neural networks.

In some instances, one or more machine-learned models 551 can include large language models. By way of example, large language models can include deep neural networks organized in a transformer architecture which can allow for processing natural language input utilizing self-attention. In some instances, large language models can include diffusion models. Large language models as described herein can be capable of processing multi-modal input such as text, image, audio, or video to generate multi-modal output such as text, image, audio, or video.

As an example, the model development system 540 can communicate with the computing device(s) 505 or server computing system(s) 520 according to a client-server relationship. For example, the model development system 540 can implement the machine-learned models to provide the GILES service to computing device(s) 505 or server computing system(s) 520. Thus, machine-learned models 519 can be located and used at the computing device(s) 505, machine-learned model(s) 531 can be coated and used at server computing system(s) 520, and/or machine-learned models can be located and used at the model development system 540.

In some implementations, the model development system 540, computing device(s) 505, and/or the server computing system(s) 520 can train the machine-learned models 519, machine-learned models 531, and/or machine-learned models 551 through use of developer tool(s) 549, including, for instance, a model trainer. The model trainer can train the machine-learned models 519, machine-learned models 531, and/or machine-learned models 551 using one or more training or learning algorithms. One example training technique is backwards propagation of errors ("backpropagation").

In some implementations, the model trainer can perform supervised training techniques using a set of labeled training data. In other implementations, the model trainer can perform unsupervised training techniques using a set of unlabeled training data. The model trainer can perform a number of generalization techniques to improve the generalization capability of the models being trained. Generalization techniques include weight decays, dropouts, or other techniques. The model trainer can be implemented in hardware, software, firmware, or combinations thereof.

The computing device(s) 505 can also include a network interface used to communicate with one or more systems or devices, including systems or devices that are remotely located from the computing device(s) 505. The network interface can include any circuits, components, software, etc. for communicating with one or more networks (e.g., 550). In some implementations, the network interface can include, for example, one or more of a communications controller, receiver, transceiver, transmitter, port, conductors, software and/or hardware for communicating data. Similarly, the server computing system(s) 520 and/or model development system 540 can include a network interface.

The network(s) 550 can be any type of network or combination of networks that allows for communication between devices. In some embodiments, the network(s) can include one or more of a local area network, wide area network, the Internet, secure network, cellular network, mesh network, peer-to-peer communication link and/or some combination thereof and can include any number of wired or wireless links. Communication over the network(s) 550 can be accomplished, for instance, via a network interface using any type of protocol, protection scheme, encoding, format, packaging, etc.

FIG. 5 illustrates one example computing system that can be used to implement the present disclosure. Other computing systems can be used as well. For example, in some implementations, the computing device(s) 505 can include the model development system 540 and developer tool(s) 549. In such implementations, the machine-learned models 519, machine-learned models 531, and/or machine-learned models 551 can be both trained and used locally at the computing device(s) 505. As another example, in some implementations, the computing device(s) 505 are not connected to other computing systems.

Other computing system configurations can be used as well. For example, in some implementations, one or both of computing device(s) 505 or server computing system(s) 520 can implement all or a portion of the operations of model development system 540. For example, computing device(s) 505 or server computing system(s) 520 can implement developer tool(s) 549 (or extensions thereof) to develop, update/train, or refine machine-learned models 519, machine-learned models 531, machine-learned models 551, etc. using one or more techniques described herein. In this manner, for instance, computing device(s) 505 or server computing system(s) 520 can develop, update/train, or refine machine-learned models based on local datasets (e.g., for model personalization/customization, as permitted by user data preference selections).

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments.

Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents. Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of" example elements listed therein, etc. Terms such as "based on" should be understood as "based at least in part on." The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

## Claims

1. A computing system comprising:
1.1 one or more processors; and
1.2 one or more non-transitory computer-readable media storing instructions that are executable to cause the one or more processors to perform operations,
1.3 the operations comprising:
1.3.1 accessing, by the computing system, input data comprising a config file;
1.3.2 processing, by the computing system, the config file to generate output comprising
1.3.2.1 one or more phases of a workflow and
1.3.2.2 one or more steps for the respective phases of the workflow;
1.3.3 for each respective step of the one or more steps of a first phase of the one or more phases:
1.3.3.1 initiating, by the computing system, a chat session for a first step of the one or more steps, the chat session comprising a conversation between a user and a first machine-learned model to work on the first step of the workflow;
1.3.3.2 determining, by the computing system, that the first step has been completed;
1.3.3.3 extracting, by the computing system and based on determining that the first step has been completed, output comprising conversation context data;
1.3.3.4 determining that all phases of the one or more phases of the workflow are complete; and
1.3.3.5 generating, based on the output and the conversation context data, output comprising an executable plan indicative of the one or more steps and the one or more phases.

2. The computing system of claim 1, wherein initiating the chat session comprises:
selecting, based on the first step of the workflow, the first machine-learned model out of a plurality of candidate machine-learned models based on a subject matter associated with the first step.

3. The computing system of claim 1, wherein the combination of each respective step of the one or more steps comprises a user session and wherein the input provided to the first machine-learned model comprises context data associated with one or more prior chat sessions associated with the user session.

4. The computing system of claim 1, wherein the config file comprises a description of a software product to be developed.

5. The computing system of claim 1, wherein the executable plan comprises at least one of:
5.1 testable requirements data,
5.2 specifications data,
5.3 test data,
5.4 code data, or
5.5 documentation data.

6. The computing system of claim 5, wherein
6.1 the specifications data comprises application programming interface (API) specifications; and/or
6.2 test data comprising a test plan and test automation, wherein the test automation comprises executable instructions that, when executed by the one or more processors of the computing system, cause the computing system to perform operations comprises the test automation; and/or
6.3 the code data comprises executable code in one or more computing languages; and/or
6.4 the documentation data comprises natural language description to accompany the code data.

7. A computer-implemented method comprising:
7.1 accessing, by a computing system, input data comprising a config file;
7.2 processing, by the computing system, the config file to generate output comprising
7.2.1 one or more phases of a workflow and
7.2.2 one or more steps for the respective phases of the workflow;
7.3 for each respective step of the one or more steps of a first phase of the one or more phases:
7.3.1 initiating, by the computing system, a chat session for a first step of the one or more steps, the chat session comprising a conversation between a user and a first machine-learned model to work on the first step of the workflow;
7.3.2 determining, by the computing system, that the first step has been completed;
7.3.3 extracting, by the computing system and based on determining that the first step has been completed, output comprising conversation context data;
7.3.4 determining that all phases of the one or more phases of the workflow are complete; and
7.3.5 generating, based on the output and the conversation context data, output comprising an executable plan indicative of the one or more steps and the one or more phases.

8. The computer-implemented method of claim 7, wherein initiating the chat session comprises:
selecting, based on the first step of the workflow, the first machine-learned model out of a plurality of candidate machine-learned models based on a subject matter associated with the first step.

9. The computer-implemented method of claim 7, wherein the combination of each respective step of the one or more steps comprises a user session and wherein the input provided to the first machine-learned model comprises context data associated with one or more prior chat sessions associated with the user session.

10. The computer-implemented method of claim 7, wherein the config file comprises a description of a software product to be developed.

11. The computer-implemented method of claim 7, wherein the executable plan comprises at least one of:
11.1 testable requirements data,
11.2 specifications data,
11.3 test data,
11.4 code data, or
11.5 documentation data.

12. The computer-implemented method of claim 11, wherein
12.1 the specifications data comprises application programming interface (API) specifications; and/or
12.2 test data comprising a test plan and test automation, wherein the test automation comprises executable instructions that, when executed by one or more processors of the computing system, cause the computing system to perform operations comprises the test automation; and/or
12.3 the code data comprises executable code in one or more computing languages; and/or
12.4 the documentation data comprises natural language description to accompany the code data.

13. One or more non-transitory computer readable media storing instructions that are executable to cause one or more processors to perform operations, the operations comprising:
13.1 accessing, by a computing system, input data comprising a config file;
13.2 processing, by the computing system, the config file to generate output comprising
13.2.1 one or more phases of a workflow and
13.2.2 one or more steps for the respective phases of the workflow;
13.3 for each respective step of the one or more steps of a first phase of the one or more phases:
13.3.1 initiating, by the computing system, a chat session for a first step of the one or more steps, the chat session comprising a conversation between a user and a first machine-learned model to work on the first step of the workflow;
13.3.2 determining, by the computing system, that the first step has been completed;
13.3.3 extracting, by the computing system and based on determining that the first step has been completed, output comprising conversation context data;
13.3.4 determining that all phases of the one or more phases of the workflow are complete; and
13.3.5 generating, based on the output and the conversation context data, output comprising an executable plan indicative of the one or more steps and the one or more phases.

14. The one or more non-transitory computer readable media storing instructions of claim 13,
14.1 wherein initiating the chat session comprises:
selecting, based on the first step of the workflow, the first machine-learned model out of a plurality of candidate machine-learned models based on a subject matter associated with the first step, and
14.2 wherein the executable plan comprises at least one of:
14.2.1 testable requirements data,
14.2.2 specifications data,
14.2.3 test data,
14.2.4 code data, or
14.2.5 documentation data.
